# EUROPEAN PATENT APPLICATION

(11) **EP 2 182 723 A2**
(43) Date of publication of application: **05.05.2010**
(21) Application number: 09707249.0
(22) Date of filing: 04.02.2009
(51) Int. Cl.: H04N 5/44

(54) **SPACE-SHIFTING IP STREAMING SYSTEM ACHIEVED THROUGH A VIDEO PLAYBACK METHOD BASED ON A RICH INTERNET APPLICATION (RIA)**

(30) Priority: 04.02.2008 KR 20080010933
(71) Applicant: Choi, Jung-In, Donggak-gu Seoul 156-030 (KR)
(72) Inventor: Choi, Jung-In, Donggak-gu Seoul 156-030 (KR)
(74) Representative: Betten & Resch
(86) International application number: PCT/KR2009/000538
(87) International publication number: WO 2009/099293

(57) **Abstract**

The present invention relates to a place-shifting IP streaming system using an RIA-based moving image playback method which increases users' accessibility by removing the difficulties of performing download and setting players for respective client PCs having various environment and enables various types of multimedia to be implemented by facilitating porting to HTML-based websites, and, more particularly, to a place-shifting IP streaming system using an RIA-based moving image playback method which adjusts signals to a moving image (H.264 and WMV) and sound (AAC) codec required by Flash or Silverlight, packages them in MPEG 4 format and sends them in a streaming manner using the moving image encoder of a streaming module so that an Active-X type dedicated moving image player can be implemented using Flash or Silverlight, which is an a Rich Internet Application (RIA)-based general-purpose moving image playback technology, on a client PC.

## Description

### Technical Field

The present invention relates, in general, to technology for implementing the place-shifting functionality of enabling TV programs received at home to be viewed and controlled on a remote PC or mobile terminal using an IP streaming method, and, more particularly, to a place-shifting IP streaming system using an RIA-based moving image playback method in which the moving image encoder of a streaming module adjusts signals to a moving image (H.264 and WMV) and sound codec (AAC or the like) required by Flash or Silverlight, packages them in the required format (MPEG 4 or the like), and sends them using a required streaming method so that Flash or Silverlight, which is a Rich Internet Application (RIA)-based general-purpose moving image playback technology, can be used at a client PC.

### Background Art

Today, technologies for enabling TV program broadcasts viewed at home to be viewed and controlled on a remote terminal via the IP-type Internet have emerged.

A representative example thereof is U.S. Sling Media's product, which is a technology for installing a separate dedicated box, called a Sling box, beside a TV STB or PVR, receiving broadcast signals from the STB in analog fashion, performing digital compression and encoding on the broadcast signals in the box, and sending the resulting signals to a remote PC through an IP communication module via the Internet in a streaming fashion.

In this case, a dedicated multimedia player is installed on a PC, broadcast signals are received, played back and viewed in real time using the player program, and the STB or PVR is controlled using dedicated control signals in IR blaster fashion.

However, since this technology entails the difficulties of installing a dedicated player on all PCs on which playback is desired and setting it according to the type of STB or PVR, extensive popularization of the technology is limited.

In order to overcome these difficulties, technology related to the preceding patent application "XML (extensible Markup Language)-based Personal Media Broadcast Platform and Automatic IP (Internet Protocol) Setting Method (Korean Patent Application Number: 10-2007-0027148)" having a web-based open structure was proposed, and was implemented as a product, called an Acobox, by Korean Acogito Co., Ltd.

The first of the principal background technologies used in the product is a compression codec technology for sending a moving image in real time in an IP manner. Since the commercialization thereof is accompanied with limitations resulting from the infrastructure of the Internet communication band, a codec having the best possible compression ratio must be used. Currently, MPEG 4, H.264 and WMV9 (or VC-1) are being used.

Furthermore, since a server module must be implemented on low-level hardware, it is preferable that a digital compression encoder be implemented using a hardware-based chip. Currently, MPEG 4 and H.264 encoder general-purpose chips have been commercialized and a WMV9 general-purpose chip will be commercialized soon. If there is no general-purpose chip, software implementation on a general DSP chip is possible.

The playback of multimedia on client PCs is performed by various commercially open players, such as a VLS, which are implemented using a software decoder.

The open software is being modified or newly defined-type dedicated players are being developed in Active-X form and are then installed on PCs over the web.

All of the current commercial products, such as Slingbox and Acobox, which are products in which multimedia place-shifting functionality has been implemented in an IP streaming manner, are based on downloading or web-based Active-X type dedicated multimedia players.

Accordingly, the settings of a player must be changed depending on the platform and communication environment of a PC or terminal on which remote playback will be performed, and upgrades must be continually performed to comply with new environments.

In particular, the optimization of streaming in accordance with the status of a communication network is very difficult in reality. Furthermore, the players have very inflexible structures which make the change in the functionality of the players and the diversification and customization of UIs very difficult.

Meanwhile, users are burdened by the installations of various multimedia players on PCs, in terms of the management of the internal resources of the PCs, so that they can use various services. This problem is a big obstacle to the popularization of IP streaming devices.

### Disclosure

### Technical Problem

Accordingly, the present invention has been made keeping in mind the above problems occurring in the prior art, and an object of the present invention is to provide a place-shifting IP streaming system using an RIA-based moving image playback method, which adjusts signals to a moving image (H.264 and WMV) and sound codec (AAC or the like) required by Flash or Silverlight, packages them in MPEG 4 format and sends them in a streaming manner using the moving image encoder of a streaming module so that an Active-X type dedicated moving image player can be implemented using Flash or Silverlight, which is an a Rich Internet Application (RIA)-based general-purpose moving image playback technology, on a client PC.

### Technical Solution

In order to accomplish the above object, the present invention provides a place-shifting IP streaming system using an RIA-based moving image playback method, including a remote terminal equipped with a client module on which a Flash player or a Silverlight runtime has been installed; an STB/PVR equipped with an IP streaming server module for compressively encoding analog signals, received from a broadcasting station, into digital signals in the form determined by Flash or Silverlight on the remote terminal, and streaming the digital signals to the remote terminal via an Internet in an IP manner; and a service platform for performing communication setting and authentication between the IP streaming server module and the client module, installing a player UI on the remote terminal, and performing XML-based control and metadata transmission.

According to the present invention, it is preferable that the player UI be implemented in the form of an swf file obtained by compiling MXML/ActionScript code or an xap file obtained by compiling XAML/dll code.

According to the present invention, it is preferable that the IP streaming server module, if the remote terminal supports the Flash player, adjust the digital signals to desired format by packaging an H.264/AAC video and sound codec in MPEG 4 format.

According to the present invention, it is preferable that the IP streaming server module, if the remote terminal supports the Silverlight, adjusts the digital signals to a WMV/WMA codec and sends them.

According to the present invention, it is preferable that the IP streaming server module be configured to implement the digital compressive encoding using a hardware chip and a server function for performing streaming using internal software, so that multimedia packets are stored in a virtual drive file and then these stored packets are successively sent, thereby performing a real-time streaming function.

According to the present invention, it is preferable that the STB/PVR further include an XML module connected to one side of the IP streaming server module so as to send and receive XML control signals with respect to the remote terminal.

According to the present invention, it is preferable that, as a control UI module of the player UI displayed on the remote terminal operates, the service platform create an XML command tag and send the XML command tag to the IP streaming server module, so that the IP streaming server module executes a relevant command using internal or RS232 communication with any one of an IR blaster, the STB and the PVR in response to the command tag and a corresponding moving image stream is displayed on the player UI.

According to the present invention, it is preferable that the content be provided by the IP streaming server module, the swf file obtained by compiling the RIA-based Flash/Flex MXML/ActionScript code or the xap file obtained by compiling the Silverlight XAML/dll code be created by the service platform and provided to the client module of the remote terminal in the event of service access, so that only the content streaming is performed in a single direction from the IP streaming server module to the client module of the remote terminal and functions other than the content streaming are performed in both directions through the service platform.

According to the present invention, the IP streaming server may directly exchange XML tags, such as a control command, with the client module both directions without the intervention of the service platform. In this case, it is preferable that the client be implemented in desktop application-type Flash AIR or WPF form, rather than Flash.

According to the present invention, it is preferable that the service platform enable a broadcasting channel banner to be displayed in slide form at the lower end of the player on the player UI, and, when the desired channel banner is clicked or dragged and dropped on the screen, send a control command or XML tag linked to the channel banner to the IP streaming server module and enable a relevant command to be executed.

According to the present invention, it is preferable that the service platform enable EPG information to be provided on the player UI, thereby executing commands to control the IP streaming server module on the EPG screen.

According to the present invention, it is preferable that the service platform perform at least one function selected from the group consisting of trailer screen connection, PIP screen connection, real-time subscription service connection, recorded information connection, program recommendation function connection, and community connection on the player UI.

### Advantageous Effects

The place-shifting IP streaming method and system using an RIA-based moving image playback method according to the present invention, which is based on the above means for solving the problem, use Flash or Silverlight, which was developed by U.S. Adobe or Microsoft for the RIA technology for naturally combining multimedia with the web, instead of a dedicated player, so that the method and system of the present invention can be used for a variety of types of platforms for general purposes and so that the method and system of the present invention have excellent performance and reliable functionality compared to the dedicated player.

Furthermore, when the method and system of the present invention are used, playback can be immediately performed at websites because Flash players or Silverlight runtimes have been already installed in most PCs (99% in the case of Flash players).

Furthermore, when the present invention is commercialized, the difficulties of downloading and setting a player resulting from the various environments of current client PCs are removed, so that users' accessibility is significantly increased and the implementation in various forms is enabled because porting to HTML-based websites is facilitated.

That is, compared to existing products, such as Slingbox, users' convenience is significantly increased. When a website is accessed from a remote location using a PC via the Internet, a TV screen at home can be viewed and controlled without the installation of a player and the method and system of the present invention can be easily applied and installed to and at various service websites.

Moreover, a TV screen at home or a recorded broadcast program can be additionally viewed on a portal site, a blog or a mini homepage. In this case, service providers can produce a variety of types of UI screens using Flash or Silverlight and then provide them.

Moreover, since the method and system of the present invention can easily operate in conjunction with the content of service sites, service providers can create new business models.

### Description of Drawings

Fig. 1 is a diagram showing the overall configuration of a place-shifting IP streaming system using an RIA-based moving image playback method according to the present invention;
Fig. 2 is a diagram showing the configuration of the STB/PVR shown in Fig. 1;
Fig. 3 is a diagram showing the configuration of the IP streaming server module shown in Fig. 2;
Fig. 4 is a diagram showing an example of the screen of the player UI of the remote terminal shown in Fig. 1;
Fig. 5 is a diagram showing an example of an application in which the present invention is applied to the website of a satellite broadcasting station and display is performed on a remote terminal;
Fig. 6 is a diagram showing an example of the player UI which enables a channel to be selected and then a home TV screen to be viewed from a remote location;
Fig. 7 is a diagram showing an example of the player UI which operates in conjunction with an additional information service such as an EPG by the selection of additional information;
Fig. 8 is a diagram showing an example of the player UI which operates in conjunction with a channel subscription service when a channel to which a subscription has not been made is selected;
Fig. 9 is a diagram showing an example of the player UI which operates in conjunction with a PVR; and
Fig. 10 is a diagram showing an example of operating in conjunction with an open content website.

***Description of principal reference numerals***

| | | | |
|---|---|---|---|
| 100: | STB/PVR | 140: | IP streaming server module |
| 200: | remote terminal | 300: | service platform |

### Best Mode

A place-shifting IP streaming method and system using an RIA-based moving image playback method according to embodiments of the present invention will be described in detail with reference to the accompanying drawings.

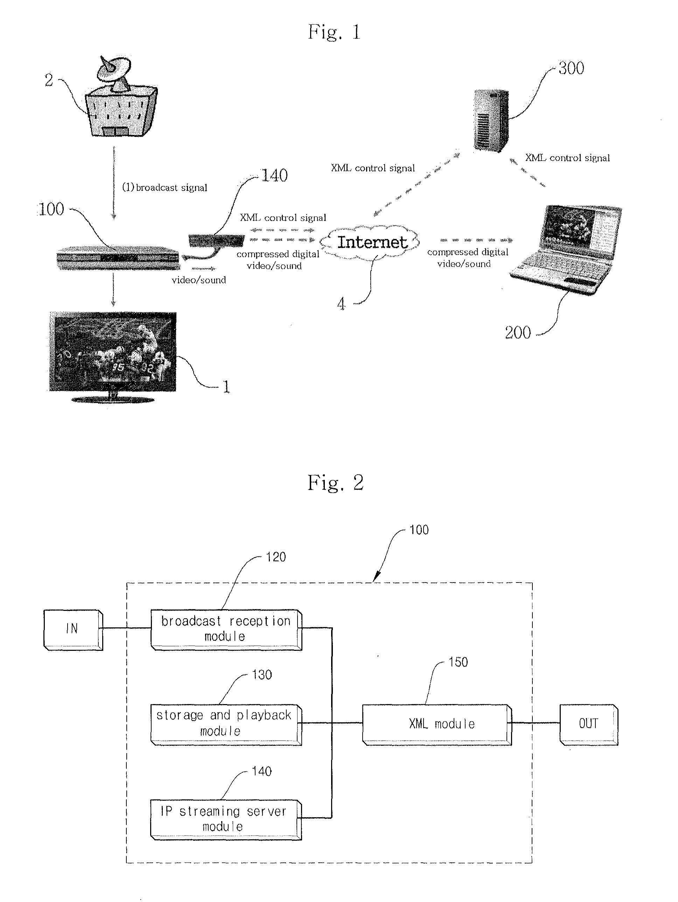

As shown in Fig. 1, the place-shifting IP streaming system using an RIA-based moving image playback method according to the present invention includes an STB/PVR 100 configured such that a server module is installed, a terminal 200 configured such that a client module is installed, and a service platform 300 configured to send and receive XML control signals between the STB/PVR 100 and the terminal 200, provide the playback screens of a TV program, and be responsible for controlling the STB/PVR 100.

The STB/PVR 100 receives TV broadcast signals from a broadcasting station 2 (via an antenna, a cable, a satellite or an IP network), and outputs the signals to a TV set 1.

Here, the STB/PVR 100 receives the broadcast signal output as separate analog signals and sends them to the IP streaming server module 140, and compressively encodes the analog signals into digital signals and sends them to the remote terminal 200 over the Internet in an IP manner, thereby enabling remote viewing (in this case, since the IP setting of the STB/PVR 100 is described in Korean Patent Application No. 10-2007-0027148 entitled "XML (extensible Markup Language)-based Personal Media Broadcast Platform and Automatic IP (Internet Protocol) Setting Method," which was filed by the applicant of the present application, a detailed description thereof is omitted here).

In order to implement this, the STB/PVR 100, as shown in Fig. 2, includes a broadcast reception module 120, a storage and playback module 130, an IP streaming server module 140, and an XML module 150.

The broadcast reception module 120 is a module for performing the functionality of an ordinary STB (a set-top box), and is a module including a decoder and an encoder so as to receive the broadcast signals of a broadcast program, sent from a broadcasting station, via broadcast transmission media, such as terrestrial waves, a cable, a satellite or an IP network, and decode the broadcast signals so that they can be output via TV.

The storage and playback module 130 is a module for performing the functionality of an ordinary DVR recorder, and is a module including memory and a CPU to be able to store the broadcast signals received from the broadcast reception module on a hard disk and play back the broadcast signals.

The IP streaming server module 140 may be contained in the STB/PVR 100 or may be externally connected to the STB/PVR 100. The IP streaming server module 140 performs the function of streaming the broadcast program stored on the hard disk through the storage and playback module 130, to the remote terminal 200 (a PC or portable terminal) using IP communication.

In this case, multimedia streams must be sent in the format determined by the Flash or Silverlight on the remote terminal 200. Since in the case of a Flash 9.0 player, an H.264/AAC video and sound codec receives streams packaged in MPEG 4 format, the IP streaming server module must adjust them to such a format and then send them.

In the case of a Silverlight, a stream must be adjusted to a WMV/WMA codec and then be sent.

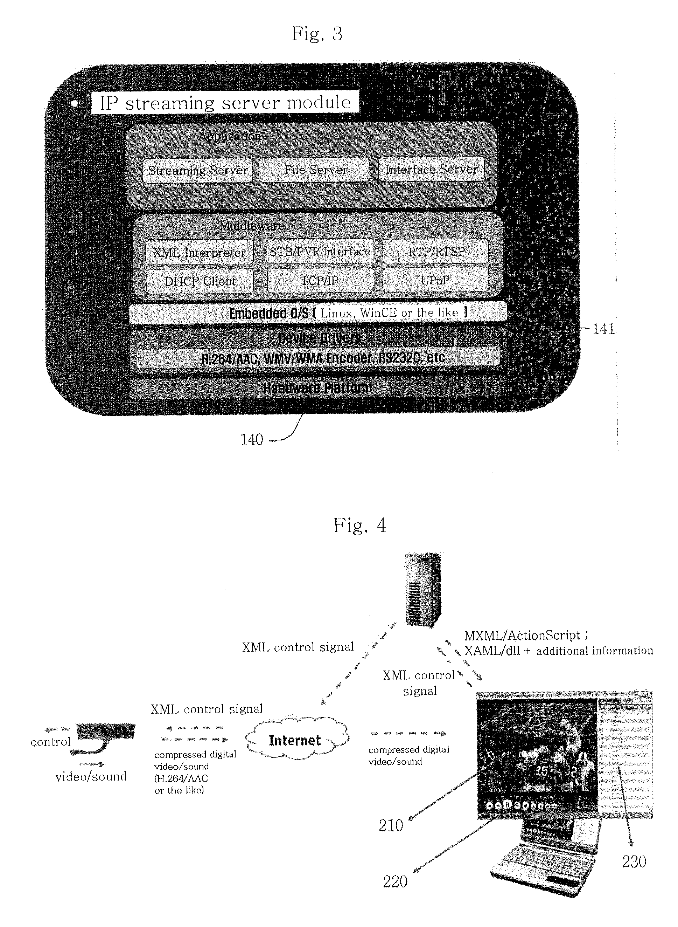

Fig. 3 is a diagram showing the configuration of the IP streaming server module 140. Assuming that the IP streaming server module 140 is implemented on low-level hardware, a digital compression and encoding function requiring real-time performance as its most important performance-related factor is implemented using a hardware chip.

In the case of Flash 9.0, implementation is performed using an H.264/AAC encoder chip, and in a CPU, a server function for performing streaming is implemented using internal software. In general, a commercial encoder chip is configured to store multimedia content in an external driver in a file. For example, the present invention is configured to store multimedia packets in a file on a virtual drive and successively send these stored packets, thereby performing the real-time streaming function.

The XML module 150 functions to make the broadcast reception module 120, the storage and playback module 130 and the IP streaming server module 140 operate in conjunction with each other by making XML-based communication and control protocols work in conjunction with the middleware of a platform.

That is, the XML module 150 is a module which receives a channel search or scheduled recording command and causes the command to be executed in response to an XML control signal from the service platform 300 to be described, or which performs execution to cause various operation commands to be sent in both directions between the STB/PVR 100 and the remote terminal, as in the case where information stored on a hard disk is sent to the remote terminal 200.

A client module, which is a multimedia player, is installed on the remote terminal 200.

The client module is implemented using RIA-based Flash or Silverlight. A Flash player or a Silverlight runtime is installed. Accordingly, when access to the service platform 300 is made, data is downloaded in the form of an swf file obtained by compiling MXML/ActionScript code when the player UI is Flash on the remote terminal 200 or in the form of an xap file obtained by compiling XAML/dll code when the player UI is Silverlight, and a multimedia stream provided by the IP streaming server module is displayed in the playback area of the UI screen of a webpage.

That is, as shown in Fig. 4, when access to the website of the service platform 300 is made and authentication is performed at the website through the remote terminal 200, a player is formed using an RIA (a Flash or a Silverlight) in a designated area of a web page in the screen of the remote terminal 200 and the screen of a TV at home is displayed on a moving image area 210 through the IP streaming server module 140 in real time.

Here, a player UI is implemented in the form of one of various files, such as an swf file obtained by compiling MXML/ActionScript code in the case of Flash, and an xap file obtained by compiling XAML/dll code in the case of Silverlight. It appears on the website thanks to a Flash player or Silverlight runtime installed on the remote terminal 200. If an operation button is clicked, the server module receives a moving image in H.264/AAC format or WMV/WMA format, and plays it back in a real-time streaming manner.

When the control UI module 220 of the player shown in Fig. 4 is operated, the player is controlled by functions which work in conjunction with the control UI module.

For example, when a channel switching control command on the control UI module 220 is activated, a relevant XML tag may be sent directly to the IP streaming server module 140 through the XML module 150 of the STB/PVR 100, or may be sent to the XML module 150 through the service platform, thus being sent to the IP streaming server module 140.

The IP streaming server module 140 performs channel switching using internal or RS232 communication with an IR blaster, the STB or the PVR in response to the channel switching command tag.

When a channel has been switched as described above, the moving image streams of the switched channel can be viewed on the remote terminal 200.

Furthermore, additional service information on the service platform 300 may be provided through an additional information area 230.

The service platform 300 performs communication setting and authentication between the IP streaming server module and the client module, the installation of a player, XML-based control, and the transmission of metadata.

In order to actually play back the multimedia streams of the STB/PVR 100 on the playback area of the UI, MXLM/ActionScript code (an swf file obtained by compiling the MXLM/ActionScript code) or XAML/dll code (an xap file obtained by compiling the XAML/dll code), which is a script document for implementing the above-described service, must be produced by the IP streaming server module 140 and provided along with a multimedia file. This cannot be implemented because the IP streaming server module 140 is the hardware board of a low-level CPU. When such files are previously installed on the client so as to overcome the above problem, implementation can be achieved using a desktop application-type of Flash AIR or WPF.

Accordingly, the present invention provides separation so that the IP streaming server module 140 provides only multimedia broadcast content causing a content-related copyright problem and a communication network overload problem while the service platform 300 creates RIA-based MXML/ActionScript code (a swf file) or XAML/dll code (an xap file) having few copyright problems and a low communication load and provides it to the client module of the remote terminal 200 in the event of service access, thereby enabling the utilization of the RIA technology.

Since an XML-type metadata transmission and control function can be also easily combined with the service script, various types of player functions can be implemented.

Accordingly, only the streaming of multimedia content is performed in a single direction from the IP streaming server module to the client module, and all the other functions are performed through the service platform 300 in both directions.

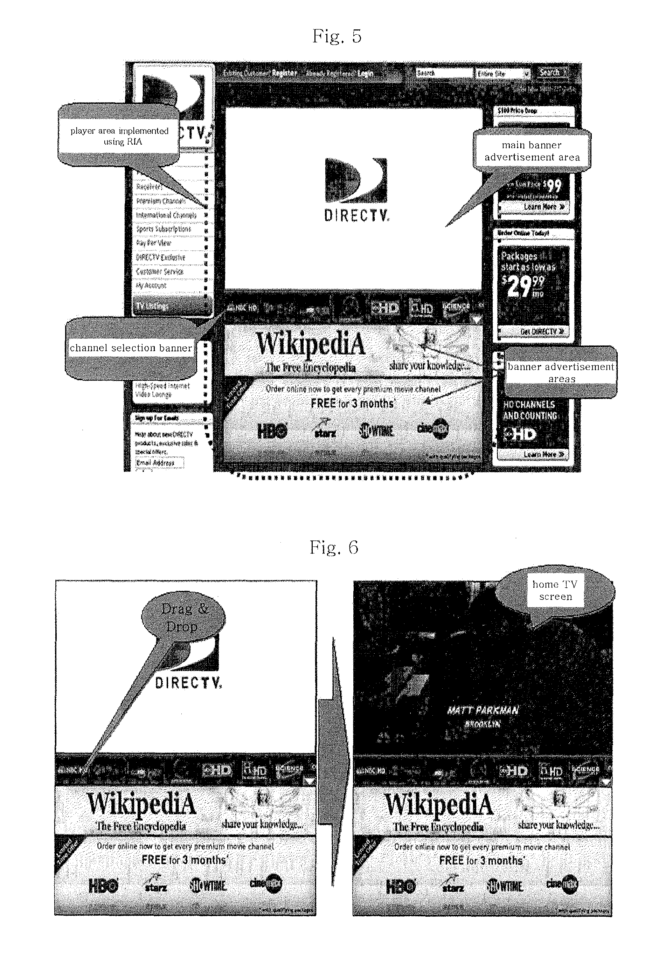

Fig. 5 shows a case where the above function has been applied to a commercial broadcasting service site, that is, a case where the above function has been applied to the website of DirecTV, which is the largest U.S. satellite broadcasting station.

That is, when a user undergoes authentication at the website of the broadcasting station (the user registers the IP address of the home STB/PVR 100 when he subscribes and becomes a member) and clicks a MYTV menu item, a main banner advertisement screen is changed to the user's home TV screen.

It is apparent that this TV screen is a player formed of an RIA. If this website was originally formed of an RIA, the screen will change naturally.

Referring to Fig. 6, if a viewer has subscribed to the satellite TV of the company, a broadcasting channel banner is additionally displayed at the lower end of the player in the form of a slide. Here, when a desired channel banner is clicked or dragged and dropped on a screen (for example, using drag & drop - this can be easily implemented using the UI technology of an RIA), a control command or an XML tag linked to the channel banner is transmitted to the IP streaming server module 140 beside the TV directly or via a service platform 300 and, therefore, this switches a TV to the relevant channel, thereby displaying the screens of the relevant channel on the screen of a remote PC.

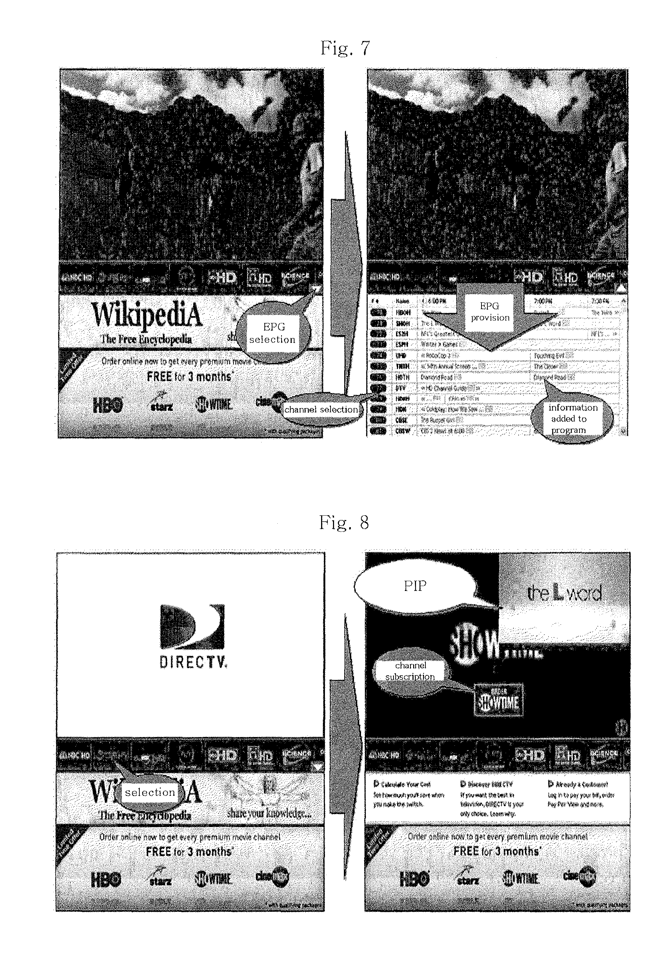

Although the volume of the TV may be adjusted by remote control, this can be immediately adjusted on the remote terminal 200 using the RIA. When a variety of information is desired, EPG information is provided, as shown in Fig. 7. Using this EPG screen, channels may be searched, a channel may be selected using the method of Fig. 6, and then the channel may be switched. Furthermore, detailed information about future programs may be provided. When a trailer screen is provided by the service platform, the screen may be displayed on the upper right portion of a main screen in Picture In Picture (PIP) form.

Furthermore, when a channel to which a subscription has not been made is selected on the channel banner or EPG, as shown in Fig. 8, it is possible to promote subscription while showing a trailer screen in PIP form. In this case, when a subscription is made using a subscription button in real time, a relative channel is immediately provided to the home TV, and therefore the screen may be checked or viewed on the PC.

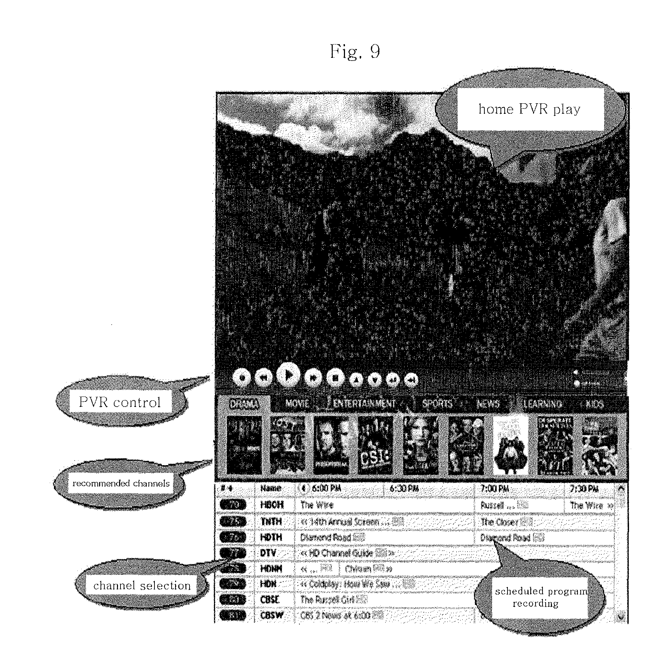

As shown in Fig. 9, the IP streaming server module 140 enables not only the recording of the PVR but also playback and scheduled recording.

It is possible to perform track mode, such as temporary stop and fast rewinding, using the control UI module 220 of the player.

When the IP streaming server module 140 operates in conjunction with the PVR in both directions, information about a list for recording may be received and the list may be displayed on the player. It may be combined with information added to a program provided by the service platform, and therefore it may be displayed in various forms.

In particular, when the viewed channel information (channel and time) of the PVR (or STB) is collected by the service platform, personal program recommendation and recording recommendation service functions may be enabled.

A recommendation list may be viewed not only on the PC but also on the TV screen by a slight change in the function.

Furthermore, a PVR web community between individuals is formed, and therefore individuals' opinions on programs and information about recommendations can be shared on the webpage of the service platform 300.

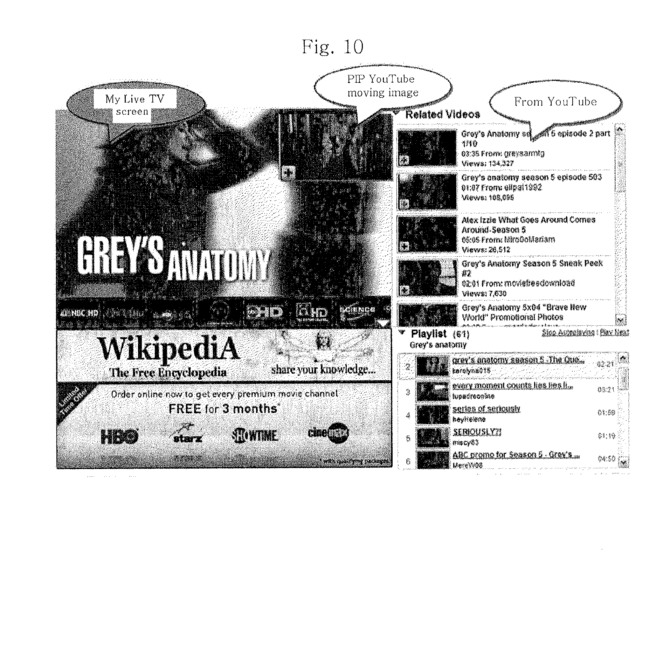

Furthermore, it is possible to show UCC content related to a channel being currently viewed, as shown in Fig. 10, in conjunction with a UCC website providing an API, such as YouTube.

That is, when information about a channel being currently viewed is automatically input to YouTube using an API, a related free UCC moving image list is provided, and therefore it is displayed like the TV live screen provided by the service platform 300. Here, when a relevant UCC moving image is clicked, the UCC moving image provided by YouTube may be provided in various forms, for example, it may be provided on the same screen or in PIP form.

## Claims

1. A place-shifting IP streaming system using an RIA-based moving image playback method, comprising:
a remote terminal equipped with a client module on which a Flash player or a Silverlight runtime has been installed;
an STB/PVR equipped with an IP streaming server module for compressively encoding analog signals, received from a broadcasting station, into digital signals in a form determined by Flash or Silverlight on the remote terminal, and streaming the digital signals to the remote terminal via an Internet in an IP manner; and
a service platform for performing communication setting and authentication between the IP streaming server module and the client module, installing a player UI on the remote terminal, and performing XML-based control and metadata transmission.

2. The system according to claim 1, wherein the player UI is implemented in a form of an swf file obtained by compiling MXML/ActionScript code or an xap file obtained by compiling XAML/dll code.

3. The system according to claim 1, wherein the IP streaming server module, if the remote terminal supports the Flash player, adjusts the digital signals to desired format by packaging an H.264/AAC video and sound codec in MPEG 4 format.

4. The system according to claim 1, wherein the IP streaming server module, if the remote terminal supports the Silverlight, adjusts the digital signals to a WMV/WMA codec and sends them.

5. The system according to claim 3 or 4, wherein the IP streaming server module is configured to implement the digital compressive encoding using a hardware chip and a server function for performing streaming using internal software, so that multimedia packets are stored in a virtual drive file and these stored packets are successively sent, thereby performing a real-time streaming function.

6. The system according to claim 1, wherein the STB/PVR further comprises an XML module connected to one side of the IP streaming server module so as to send and receive XML control signals with respect to the remote terminal.

7. The system according to claim 1, wherein, as a control UI module of the player UI displayed on the remote terminal operates, the service platform creates an XML command tag and sends the XML command tag to the IP streaming server module, so that the IP streaming server module executes a relevant command using internal or RS232 communication with any one of an IR blaster, the STB and the PVR in response to the command tag and a corresponding moving image stream is displayed on the player UI.

8. The system according to claim 2, wherein the content is provided by the IP streaming server module, the swf file obtained by compiling the RIA-based Flash/Flex MXML/ActionScript code or the xap file obtained by compiling the Silverlight XAML/dll code is created by the service platform and provided to the client module of the remote terminal in the event of service access, so that only the content streaming is performed in a single direction from the IP streaming server module to the client module of the remote terminal and functions other than the content streaming are performed in both directions through the service platform.

9. The system according to claim 2, wherein the content is provided by the IP streaming server module, the swf file obtained by compiling the RIA-based Flash/Flex MXML/ActionScript code or the xap file obtained by compiling the Silverlight XAML/dll code is created by the service platform and previously installed in a Flash Air or WPF file in a desktop application form in the client module of the remote terminal, so that the IP streaming server module directly sends control signals, other than a content stream, to the client module of the remote terminal using bidirectional communication.

10. The system according to claim 7, wherein the service platform enables a broadcasting channel banner to be displayed in slide form at a lower end of the player on the player UI, and, when the desired channel banner is clicked or dragged and dropped on the screen, sends a control command or XML tag linked to the channel banner to the IP streaming server module and enables a relevant command to be executed.

11. The system according to claim 7, wherein the service platform enables EPG information to be provided on the player UI, thereby executing commands to control the IP streaming server module on the EPG screen.

12. The system according to claim 7, wherein the service platform performs at least one function selected from the group consisting of trailer screen connection, PIP screen connection, real-time subscription service connection, recorded information connection, program recommendation function connection and community connection on the player UI.

13. The system according to claim 7, wherein the service platform performs a function of additionally displaying open content information related to IP streamed content in connection with an open content sharing website on the player UI and facilitating operation in conjunction with the open content information.
